**Europäisches Patentamt**

**European Patent Office**

**Office européen des brevets**

(11) Numéro de publication: **0 202 173**
**B1**

(12) # FASCICULE DE BREVET EUROPEEN

(45) Date de publication du fascicule du brevet:
**25.01.89**

(51) Int. Cl.⁴: **F16H 1/28,** F16H 57/12

(21) Numéro de dépôt: **86420103.3**

(22) Date de dépôt: **18.04.86**

(54) **Dispositif pour la réduction du jeu de fonctionnement radial entre des dentures d'engrenage en prise et application du même dans un réducteur de vitesse sans "jeu".**

(30) Priorité: **19.04.85 FR 8506371**

(43) Date de publication de la demande:
**20.11.86 Bulletin 86/47**

(45) Mention de la délivrance du brevet:
**25.01.89 Bulletin 89/4**

(84) Etats contractants désignés:
**AT BE CH DE GB IT LI LU NL SE**

(56) Documents cités:
**EP-A- 0 042 325**
**EP-A- 0 087 742**
**FR-A- 553 068**
**FR-A- 2 115 881**
**US-A- 2 444 734**
**US-A- 3 429 393**

(73) Titulaire: **MAAG FRANCE SA, 25 rue Pierre Brossolette, F-92403 Courbevoie(FR)**

(72) Inventeur: **Gonin, Daniel, 16 rue Etienne Richerand, Lyon (3ème) (Rhône)(FR)**
Inventeur: **Boisset, Jacques, Rue de la Troianderie, Curis au Mont d'Or Neuville/Saone Rhône(FR)**

(74) Mandataire: **Maureau, Philippe et al, Cabinet Germain & Maureau Le Britannia - Tour C 20, bld Eugène Déruelle, F-69003 Lyon(FR)**

ACTORUM AG

## Description

La présente invention a pour objet un dispositif pour la réduction du jeu de fonctionnement radial entre des dentures et/ou engrenages en prise, notamment entre une couronne externe fixe à denture intérieure et au moins un pignon en prise avec cette denture intérieure. Le dispositif en question est ainsi destiné à réduire le jeu entre des dentures et engrenages cylindriques, inhérent à la fabrication de ceux-ci, de façon à obtenir un mécanisme dit "sans jeu". Cette invention concerne aussi un réducteur de vitesse "sans jeu", plus particulièrement un réducteur à train épicycloïdal, comportant application du dispositif précité.

L'obtention de mécanismes à engrenages "sans jeu" devient à présent absolument nécessaire pour certaines industries de pointe, et notamment la robotique, qui nécessitent une extrême précision.

Pour l'obtention de tels mécanismes, il a été proposé de réaliser chaque roue dentée sous la forme de deux disques dentés reliés avec un décalage par des ressorts tarés à un couple déterminé qui appliquent les dentures associées en contact l'une avec l'autre. S'il permet effectivement d'obtenir des mécanismes "sans jeu", ce dispositif n'en présente pas moins les inconvénients suivants:

– comme la largeur d'une dent de chaque "roue" correspond en fait à l'épaisseur d'un des deux disques dentés constituant celle-ci, c'est-à-dire à l'épaisseur de la moitié de la "roue", il est nécessaire de surdimensionner celle-ci et de doubler la largeur de chaque disque la constituant pour obtenir une même largeur de denture qu'une roue normale,

– si le couple exercé dépasse la valeur de tarage des ressorts, le dispositif ne fonctionne plus et on retrouve le jeu initial entre les dentures,

– enfin ce dispositif absorbe une partie de la puissance du moteur, du fait de la présence des ressorts, ce qui nuit bien évidemment au rendement de celui-ci.

Le but de la présente invention est de remédier à ces inconvénients, en fournissant un dispositif simple et fiable qui permette de supprimer pratiquement tout jeu entre deux dentures et/ou engrenages en prise, et animés d'un mouvement relatif de rotation, et notamment entre une couronne externe fixe à denture intérieure et au moins un pignon en prise avec la denture intérieure et roulant dans cette denture.

A cet effet, la couronne fixe à denture intérieure présente extérieurement une forme conique, et il est prévu au moins une pièce femelle de forme annulaire présentant un alésage conique complémentaire de la forme conique de la couronne fixe, constituant une pièce mâle, la ou les pièces femelles ayant une rigidité radiale supérieure à celle de la pièce mâle, et des moyens étant prévus pour appliquer une force axiale sur au moins une pièce femelle et l'enfoncer sur la pièce mâle de manière à comprimer cette dernière radialement sur toute sa périphérie et réduire ainsi le jeu radial entre sa denture intérieure et celle du ou des pignons.

Les efforts axiaux exercés sur la pièce femelle sont transformés, par le biais des surfaces coniques complémentaires des pièces mâle et femelle, en efforts radiaux comprimant la pièce mâle et en réduisant le diamètre, donc le jeu entre les dentures en prise.

Selon une forme de réalisation préférée, la couronne fixe à denture inférieure, constituant la pièce mâle du dispositif, présente extérieurement la forme d'un double cône de pentes opposées et sa compression radiale est obtenue par le rapprochement axial l'une de l'autre de deux pièces femelles associées de forme annulaire, chacune de ces pièces femelles présentant intérieurement un alésage conique complémentaire de l'un des cônes de la pièce mâle.

Cette disposition permet à la fois de comprimer la pièce mâle jusqu'à ce que son diamètre intérieur atteigne la valeur désirée et d'autre part de la retenir en place à l'aide des surfaces coniques de sens opposé.

Avantageusement, une des deux pièces femelles est montée fixe et l'autre pièce femelle est rendue solidaire de celle-ci avec possibilité de déplacement axial au moyen de vis.

Cette disposition permet d'une part de réaliser un montage très simple et d'autre part d'effectuer un dosage précis des efforts axiaux exercés par les pièces femelles sur la pièce mâle par serrage de toutes les vis par un même effort exercé au moyen d'une clé dynamométrique.

Dans le cas d'un réducteur de vitesse à train épicycloïdal, le dispositif objet de l'invention, défini précédemment, s'applique avantageusement à la réduction du jeu de fonctionnement radial entre la couronne extérieure fixe et chacun des pignons satellites du train épicyclcoïdal. L'élimination de tout jeu entre les différents engrenages du réducteur peut être obtenue en prévoyant encore, pour la réduction du jeu entre les satellites et le planétaire du train épicycloïdal, un réglage par excentrique de la position des satellites.

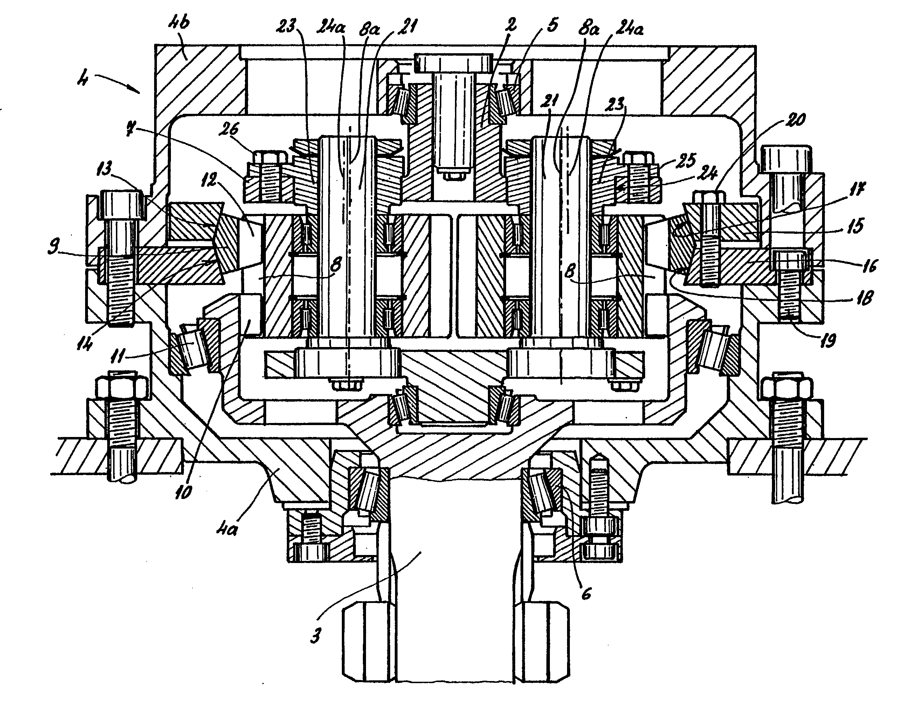

De toutes façon l'invention sera bien comprise, et d'autres caractéristiques seront mises en évidence, à l'aide de la description qui suit en référence au dessin schématique annexé dont l'unique figure est une vue en coupe d'un réducteur de vitesse à train épicycloïdal "sans jeu" comportant application du dispositif selon l'invention.

Ainsi que le montre la figure, le réducteur de vitesse comporte un arbre d'entrée moteur (2) et un arbre de sortie récepteur (3) s'étendant coaxialement au précédent. Ces deux arbres (2, 3) sont montés rotatifs à l'aide de roulements (respectivement 5, 6) dans le carter (4) du réducteur qui est en deux parties (4a, 4b).

L'arbre d'entrée (2) s'élargit à son extrémité pour former deux bras (7) sur chacun desquels est monté un pignon denté (8). Chaque pignon (8) est monté tournant fou autour de son axe (8a) et constitue l'un des satellites du train épicycloïdal. Les pignons dentés (8) sont en prise avec une couronne (9) à denture intérieure solidaire du carter (4) du réducteur et ils engrènent également avec une couronne dentée (10) solidaire de l'arbre de sortie (3) qui est guidée rotative dans le carter (4) à l'aide d'un roulement (11) et qui constitue le "planétaire" du train épicycloïdal.

Le jeu entre la couronne dentée (9) et chacun des pignons (8) est annulé à l'aide du dispositif selon l'invention.

Cette couronne (9) à denture intérieure (12) présente extérieurement une double surface conique (13, 14) de pentes opposées. Elle est serrée par deux brides annulaires (15, 16), présentant chacune un alésage conique (respectivement 17, 18) de sens opposés et de même angle au centre, similaire à celui des deux surfaces coniques (13, 14).

La bride inférieure (16) est fixée sur la moitié inférieure (4a) du carter (4) au moyen de vis (19) régulièrement réparties sur sa périphérie.

La bride supérieure (15) est rendue solidaire de la bride inférieure (16) au moyen de vis (20) régulièrement réparties (tous les 15° dans l'exemple du dessin) sur la périphérie des deux brides (15, 16). La bride (15) est déplacée axialement en direction de la bride inférieure (16) par vissage des vis (20) dans celle-ci.

De ce fait la réduction du jeu entre la couronne dentée (9) et les pignons peut être réalisée très simplement:

Les satellites (8) et la bride inférieure (6) étant mis en place dans le réducteur, il suffit de mettre en place la couronne dentée (9), en appui par sa face conique (14) sur la face conique associée (18) de la bride inférieure (16), puis la bride supérieure (15), de façon qu'elle soit en appui par sa face conique (17) sur la face conique (13) de la couronne (9).

Ensuite le vissage des vis (20) provoque le déplacement axial de la bride supérieure (15) vers la bride inférieure (16) et les efforts axiaux ainsi engendrés sont transformés par le biais des surfaces coniques (13, 14, 17, 18) en efforts radiaux de compression sur la couronne dentée (9), et il en résulte une diminution de diamètre intérieur de celle-ci éliminant tout jeu radial entre sa denture (12) et celle des pignons (8). Bien entendu les efforts de serrage sur les vis (20) sont appliqués à l'aide d'une clé dynamométrique, et sont déterminés par le calcul pour chaque diminution de diamètre devant être obtenue.

Avec une couronne dentée (9) en acier 42CD4 nitruré et d'un diamètre intérieur de 165 mm, des déformations pouvant aller jusqu'à 0,4 mm ont pu être obtenues, ce qui permet de réduire le jeu de fonctionnement entre la denture de cette couronne (9) et les pignons (8) à moins de 1/100 mm c'est-à-dire d'obtenir un jeu de fonctionnement dit "nul".

Pour une couronne (9) dans le même acier 42CD4, les déformations maximales atteintes ont été de:

1 mm pour un diamètre intérieur de 300 mm
2 mm pour un diamètre intérieur de 500 mm
3 mm pour un diamètre intérieur de 700 mm

En outre la couronne (9) est retenue fixe à l'intérieur du carter (4) par le biais des surfaces coniques des deux brides (15, 16).

L'angle des cônes mâles et femelles est calculé de façon que les efforts axiaux transmis par la vis (20) soient transformés en des efforts radiaux d'intensité suffisante pour comprimer la couronne et aussi de façon qu'il soit possible de décoincer la couronne lors du démontage. Dans l'exemple précis du dessin, cet angle est égal à 33°, mais il est compris de façon générale entre 30° et 35°.

Afin d'obtenir un réducteur de vitesse totalement "sans jeu" il convient non seulement d'éliminer les jeux entre la couronne dentée fixe (9) et les satellites (8) mais également entre ces mêmes satellites (8) et la couronne dentée (10) mobile, c'est-à-dire "le planétaire". Cette réduction du jeu est obtenue par le montage des satellites (8). Chaque pignon (8) est monté rotatif, à l'aide du roulement (22), sur un arbre cylindrique (21) dont l'axe constitue l'axe de rotation (8a) des pignons (8) sur eux-mêmes. Chaque arbre (21) est fixé par une extrémité de façon excentrée sur un disque d'excentrique (23), c'est-à-dire de façon que son axe qui constitue l'axe de rotation (8a) des pignons soit décalé par rapport à l'axe (24a) du disque (23). Chaque disque (23) comporte une partie cylindrique (24), dont l'axe constitue l'axe d'excentrique (24a) du disque, apte à tourner dans un alésage correspondant du bras associé (7) de l'arbre d'entree (2), et une bride (25) de fixation à l'aide d'une vis (26) sur ce bras (7). De cette façon la rotation du disque d'excentrique (23) autour de son axe (24a), provoquera le déplacement radial du pignon (8) associé et permettra par conséquent le réglage de son jeu.

Le montage du réducteur de vitesse à train épicycloïdal "sans jeu" sera donc effectué de la façon suivante:

la couronne dentée (19) est tout d'abord mise en place é l'intérieur du carter (4) du réducteur. Les pignons (8) sont alors montés, de façon à engrener avec cette couronne (10) et les jeux (résultants des tolérances de fabrication) entre ces pignons (8) et la couronne (10) sont éliminés de la façon décrite ci-avant à l'aide du réglage par excentrique. Il ne reste plus alors qu'à mettre en place la couronne dentée fixe (9) et à éliminer les jeux entre celle-ci et les pignons (8) à l'aide des brides (15, 16) selon l'invention.

Bien entendu le même réglage par excentrique pourrait être obtenu si l'organe denté mobile engrenant avec les pignons (8) était formé non pas par une couronne mais par une roue dentée. On obtient alors un réducteur de vitesse absolument "sans jeu", qui est particulièrement fiable (et qui n'est notamment pas soumis au tarage de ressorts comme dans la technique connue).

Dans le réducteur de vitesse montré ici, l'écartement des satellites (8) pourrait, afin de réduire le jeu entre ceux-ci et la couronne dentée (10), bien évidemment être réalisé d'une autre façon, de même les efforts de pression exercés par les vis (20) pourraient être réalisés à l'aide d'autres moyens de pression tels que des vérins ou un piston annulaire actionné hydrauliquement et apte à exercer une pression uniforme sur l'une des brides, sans que l'on sorte pour autant du cadre de la présente invention.

**Revendications**

1. Dispositif pour la réduction du jeu de fonctionnement radial entre des dentures et/ou engrenages en prise, notamment entre une couronne externe fixe (9) à denture intérieure (12) et au moins un pignon (8) en prise avec cette denture intérieure (12), caractérisé en ce que la couronne fixe (9) à denture intérieure (12) présente, extérieurement, une forme conique (13, 14) et en ce qu'il est prévu au moins une pièce femelle (15, 16) de forme annulaire présentant un alésage conique (17, 18) complémentaire de la forme conique (13, 14) de la couronne fixe (9), constituant une pièce mâle, la ou les pièces femelles (15, 16) ayant une rigidité radiale supérieure à celle de la pièce mâle (9), et des moyens (20) étant prévus pour appliquer une force axiale sur au moins une pièce femelle (15, 16) et l'enfoncer sur la pièce mâle (9) de manière à comprimer cette dernière radialement sur toute sa périphérie et réduire ainsi le jeu radial entre sa denture intérieure (12) et celle du ou des pignons (8).

2. Dispositif selon la revendication 1, caractérisé en ce que la couronne fixe (9) à denture intérieure (12), constituant la pièce mâle, présente extérieurement la forme d'un double cône (13, 14) de pentes opposées et en ce que sa compression radiale est obtenue par le rapprochement axial l'une de l'autre de deux pièces femelles (15, 16) associées de forme annulaire, chacune de ces pièces femelles (15, 16) présentant intérieurement un alésage conique (respectivement 17, 18) complémentaire de l'un des cônes (respectivement 13, 14) de la pièce mâle (9).

3. Dispositif selon la revendication 2, caractérisé en ce qu'une (16) des deux pièces femelles (15, 16) est montée fixe et en ce que l'autre pièce femelle (15) est rendue solidaire de celle-ci avec possibilité de déplacement axial au moyen de vis (29).

4. Dispositif selon la revendication 3, caractérisé en ce que l'effort de serrage est le même pour chaque vis (20) et en ce qu'il est appliqué au moyen d'une clé dynamométrique.

5. Dispositif selon l'une quelconque des revendications 1 à 4, caractérisé en ce que l'angle des surfaces coniques (13, 14, 17, 18) est compris entre 30 et 35°.

6. Dispositif selon l'une quelconque des revendications 1 à 5, caractérisé en ce que la pièce mâle (9) est en acier de type 42CD4.

7. Réducteur de vitesse à train épicycloïdal "sans jeu", caractérisé en ce que la réduction du jeu de fonctionnement radial entre la couronne externe fixe (9) à denture intérieure (12) et chacun des pignons satellites (8) du train épicycloïdal est obtenue par le dispositif selon l'une quelconque des revendications 1 à 6.

8. Réducteur de vitesse selon la revendication 7, caractérisé en ce que la réduction du jeu entre les satellites (8) et le planétaire (10) du train épicycloïdal est obtenue par un réglage par excentrique (23) de la position des satellites (8).

**Patentansprüche**

1. Vorrichtung zur Verringerung des Radialspiels zwischen ineinandergreifenden Zahnrad- und/oder Getriebeverzahnungen, insbesondere zwischen einem äußeren Zahnkranz (9) mit Innenverzahnung (12) und wenigstens einem mit der Innenverzahnung (12) kämmenden Ritzel (8), dadurch gekennzeichnet, daß der feste Zahnkranz (9) mit der Innenverzahnung (12) außen patrizenartig konisch (13, 14) geformt ist und daß wenigstens ein als Matrize geformtes Ringteil (15, 16) mit konischer Bohrung (17, 18) entsprechend der Konizität (13, 14) des festen Zahnkranzes (9) vorgesehen ist, wobei das oder die Ringteile (15, 16) in radialer Richtung steifer sind als das Patrizenteil (9) und Mittel (20) vorgesehen sind, um eine Axialkraft auf wenigstens ein Ringteil (15, 16) auszuüben und um es an das Patrizenteil (9) derart anzupressen, daß dieses radial an seinem gesamten Umfang komprimiert wird und um so das Radialspiel zwischen der Innenverzahnung (12) und dem oder den Ritzeln (9) zu verringern.

2. Vorrichtung nach Anspruch 1, dadurch gekennzeichnet, daß der das Patrizenteil ausbildende feste Zahnkranz (9) mit der Innenverzahnung (12) außen als Doppelkonus (13, 14) mit gegenüberliegenden Neigungen ausgebildet ist und daß seine Radialkompression durch eine axiale Annäherung der beiden ringförmig ineinander zugeordneten Ringteile (15, 16) aneinander erzielt wird, wobei jedes der beiden Ringteile (15, 16) eine konische Innenbohrung (17, 18) hat, die komplementär zu einem der Konen (13, 14) des Patrizenteils (9) ausgebildet ist.

3. Vorrichtung nach Anspruch 2, dadurch gekennzeichnet, daß eines (16) der beiden Ringteile (15, 16) fest angeordnet ist und das andere Ringteil (15) mit diesem fest verbunden ist, wobei es sich mittels Schrauben (20) axial verschieben kann.

4. Vorrichtung nach Anspruch 3, dadurch gekennzeichnet, daß die Klemmkraft für jede Schraube (20) gleich ist und mittels eines Momentenschlüssels aufgebracht wird.

5. Vorrichtung nach einem der Ansprüche 1 bis 4, dadurch gekennzeichnet, daß der Winkel der konischen Flächen (13, 14, 17, 18) zwischen 30° und 35° beträgt.

6. Vorrichtung nach einem der Ansprüche 1 bis 5, dadurch gekennzeichnet, daß das Patrizenteil (9) aus 42CD4-Stahl besteht.

7. Epizikloidisches, spielfreies Untersetzungsgetriebe dadurch gekennzeichnet, daß die Verringerung des Radialspiels zwischen dem äußeren festen Zahnkranz (9) mit Innengewinde (12) und jedem der Satellitenritzel (8) des epizikloiden Getriebezuges durch die Vorrichtung nach einem der Ansprüche 1 bis 6 erreicht wird.

8. Vorrichtung nach Anspruch 7, dadurch gekennzeichnet, daß die Verringerung des Spiels zwischen den Satelliten (8) und dem Planetenrad (10) des epizikloiden Getriebezugs durch eine exzentrische Einstellung (23) der Lage der Satelliten (8) erreicht wird.

**Claims**

1. A device for reducing the radial operational play between meshing teeth and/or gears, particularly between a fixed external ring gear (9) having internal toothing (12) and at least one pinion (8) meshing with this internal toothing (12), characterised in that the fixed ring gear (9) with internal toothing (12) has, externally, a conical shape (13, 14) and in that there is provided at least one female part (15, 16) of annular shape having a conical bore (17, 18) complementary to the conical shape (13, 14) of the fixed ring gear (9) constituting a male part, the female part or parts (15, 16) having a radial rigidity greater than that of the male part (9), and means (20) being provided to apply an axial force to at least one female part (15, 16) and drive it onto the male part (9) so as to compress the latter radially along the whole of its periphery, and thus reduce the radial play between its internal toothing (12) and that of the pinion or pinions (8).

2. A device according to Claim 1, characterised in that the fixed ring gear (9) with internal toothing (12), constituting the male part, has externally the shape of a double cone (13, 14) having opposing slopes and in that its radial compression is obtained by the coming together axially of two associated female parts (15, 16) of annular shape, each of these female parts (15, 16) having internally a conical bore (17, 18 respectively) complementary to one of the cones (13, 14 respectively) of the male part (9).

3. A device according to Claim 2, characterised in that one (16) of the two female parts (15, 16) is mounted in a fixed manner and in that the other female part (15) is connected thereto with the possibility of axial movement by means of screws (20).

4. A device according to Claim 3, characterised in that the screwing force is the same for each screw (20) and in that it is applied by means of a dynamometric wrench.

5. A device according to any one of Claims 1 to 4, characterised in that the angle of the conical surfaces (13, 14, 17, 18) is between 30° and 35°.

6. A device according to any one of Claims 1 to 5, characterised in that the male part (9) is made of steel of the type 42CD4.

7. A speed reduction gearing having an epicycloidal train "without play", characterised in that the reduction in the radial operational play between the external fixed ring gear having internal toothing (12) and each of the planet gears (8) of the epicycloidal train is obtained by the device according to any one of Claims 1 to 6.

8. A speed reduction gearing according to Claim 7, characterised in that the reduction in play between the planet gears (8) and the crown gear (10) of the epicycloidal train is obtained by eccentric adjustment (23) of the position of the planet gears (8).